# EUROPÄISCHE PATENTSCHRIFT

(11) **EP 2 044 842 B1**
(45) Veröffentlichungstag und Bekanntmachung des Hinweises auf die Patenterteilung: **11.05.2011**
(21) Anmeldenummer: 08164692.9
(22) Anmeldetag: 19.09.2008
(51) Int. Cl.: A21B 3/15

(54) **Backunterlage**
Baking underlay
Support de cuisson

(30) Priorität: 02.10.2007 DE 202007013783 U
(43) Veröffentlichungstag der Anmeldung: 08.04.2009
(73) Patentinhaber: Cofresco Frischhalteprodukte GmbH & Co. KG, 32427 Minden (DE)
(72) Erfinder: Arning, Hans-Jürgen, 32312 Lübbecke (DE)
(74) Vertreter: Dantz, Jan Henning

(56) Entgegenhaltungen:
- EP-A- 0 664 082
- WO-A-02/091835
- CH-A- 391 616

## Beschreibung

Die vorliegende Erfindung betrifft eine Backunterlage mit einem Blatt oder einer Bahn aus hitzebeständigem Material geringer Dicke, wobei das Material eine Profilierung aufweist.

Es gibt Backunterlagen in Form von Blättern oder Bahnen, die meist eine plane oder leicht geprägte Oberfläche aufweisen, die zum Vermeiden von Anhaftungen entweder aus einem schlecht haftenden Material besteht oder mit einer Antihaft-Beschichtung ausgestattet ist. Bei Verwendung der Backunterlage besteht die Notwendigkeit, das zuzubereitende Lebensmittel meist nach der halben Garzeit zu wenden, um eine gleichmäßige Bräunung bzw. Knusprigkeit an allen Seiten zu erzielen, so dass die heiße Luft im Backraum alle Oberflächen erreichen kann. Das Wenden der Lebensmittel während des Backvorganges ist vergleichsweise aufwendig.

Die WO 02/091835 offenbart ein Backpapier, dessen Oberfläche in regelmäßig angeordneten Abständen Erhebungen aufweist, die durch zwei Prägewalzen hergestellt sind. Dadurch sind in das Backpapier nach oben hervorstehende Spitzen eingeprägt.

Es ist daher Aufgabe der vorliegenden Erfindung eine Backunterlage zu schaffen, die ein Wenden der zu garenden Lebensmittel entbehrlich macht und eine Belüftung auch an der Unterseite ermöglicht.

Diese Aufgabe wird mit einer Backunterlage mit den Merkmalen des Anspruches 1 gelöst.

Erfindungsgemäß weist die Backunterlage eine Profilierung auf, die um ein vielfaches höher ist als die Dicke des Materials. Dadurch kann das Backgut an der Unterseite auf der Backunterlage aufliegen und wird durch die Profilierung auch an der Unterseite noch belüftet. Zudem sind nur geringe Kontaktflächen zwischen Backgut und Backunterlage vorhanden, so dass keine zusätzliche Antihaft-Beschichtung aufgebracht werden muss. Das Backgut kann ohne Wenden auf der Backunterlage verbleiben, wobei eine im Wesentlichen allseitige Belüftung stattfindet. Die Profilierung ist dabei regelmäßig ausgebildet.

Dabei sind gewölbte Erhebungen und Vertiefungen in regelmäßigen Abständen angeordnet, die als kalottenförmige Profilierungen beidseitig eingeprägt sind.

Gemäß einer bevorzugten Ausgestaltung der Erfindung ist die Höhe der Profilierung mindestens dreißigmal, vorzugsweise fiinfzig- bis hundertmal so groß wie die Dicke des Materials. Dadurch wird gewährleistet, dass auch an der Unterseite eine ausreichende Belüftung des Backgutes vorhanden ist.

Das Material ist gemäß einer bevorzugten Ausgestaltung der Erfindung so ausgestaltet, dass es Temperaturen von mindestens 200° ohne Zersetzung oder Schmelzen für mehrere Stunden aushält. Die zu erwartenden Temperaturen liegen meist bei 200° bis 220° und die Backunterlage inklusive der Profilierung muss diese Temperaturen für die Dauer des Backvorganges aushalten, wobei die Backunterlage aus Papier, Kunststoffen, wie PET, Polyamid, Aluminium, Teflon oder aus Silikonelastomeren bestehen kann.

Für eine dauerhafte Einbringung der Profilierung in die Backunterlage kann das Material verprägt oder verpresst sein, wobei ein Verprägen über beheizte Walzen erfolgen kann, die auch im kontinuierlichen Betrieb die Profilierung in die Backunterlage einbringen können.

Die Materialdicke der Backunterlage kann dabei zwischen 10 µm bis 100 µm betragen.

Die Erfindung wird nachfolgend anhand mehrerer Ausführungsbeispiele mit Bezug auf die beigefügten Zeichnungen erläutert. Es zeigen:
- Figuren 1A und 1B: zwei Ansichten eines Ausschnittes eines nicht zur Er- findung gehörigen ersten Ausführungsbeispiels einer Backunterlage;
- Figuren 2A und 2B: zwei Ansichten eines Ausschnittes eines zweiten nicht zur Erfindung gehörigen Ausführungsbeispieles einer Backunterlage, und
- Figur 3: eine Ansicht eines Ausführungsbeispiels einer erfin- dungsgemäßen Backunterlage.

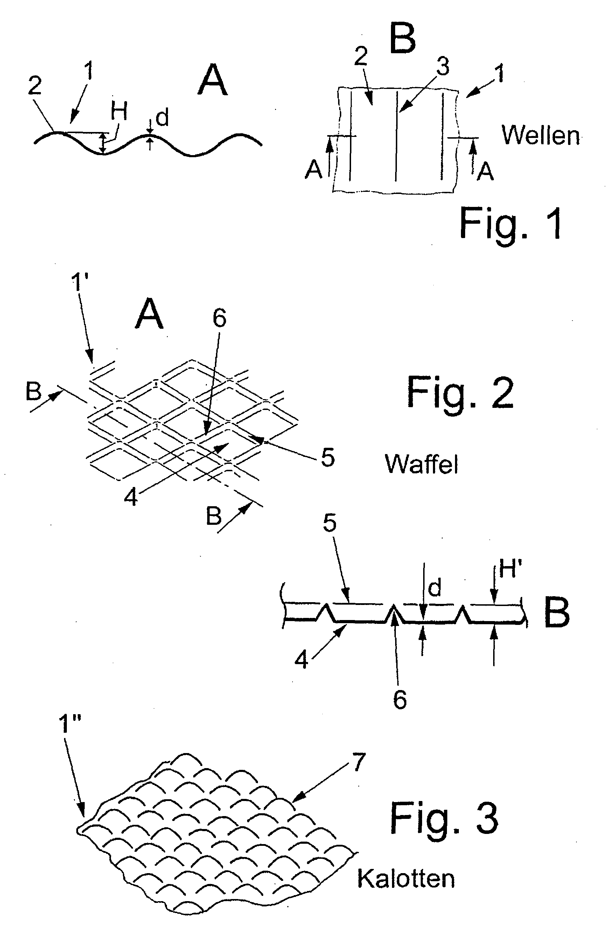

In den Figuren 1A und 1B ist eine Backunterlage 1 aus einem Blatt oder einem bahnförmigen Material gezeigt, die eine regelmäßige Profilierung aufweist. Die Profilierung ist aus leistenförmigen Rippen 2 und Vertiefungen 3 gebildet. Eine Höhe H der Rippen 2 gegenüber den Vertiefungen 3 beträgt etwa 1 mm bis 5 mm, während das Material der Backunterlage 1 eine Dicke d von nur 10 µm bis 100 µm, vorzugsweise etwas 40 µm bis 60 µm. aufweist. Insofern ist die durch die Rippen 2 gebildete Profilierung ein vielfaches größer als die Dicke des Materials. Das Material mit Profilierung kann beispielsweise zwischen 2 bis 8mm vorzugsweise 4 bis 6mm dick sein. Durch die Wellenform der Backunterlage sind die mechanischen Eigenschaften in Längs- bzw. Querrichtung unterschiedlich.

In Figur 2A und 2B ist ein weiteres Ausführungsbeispiel einer Backunterlage 1' gezeigt, die zur Vermeidung einer unerwünschten Anisotropie eine andere Struktur aufweist, so dass die mechanischen Eigenschaften in den beiden Hauptdimensionen annähernd gleich ist. Hiefür weist die Backunterlage 1' Rippen 5 in Querrichtung und senkrecht hierzu Rippen 6 in Längsrichtung auf. Dadurch sind zwischen den Rippen 5 und 6 im Wesentlichen quadratische Vertiefungen 4 ausgebildet, so dass sich ein waffelförmiges Muster ergibt. Die Profilierung zwischen den Vertiefungen 4 und den Rippen 5 oder 6 besitzt eine Höhe H', die ebenfalls ein vielfaches größer ist als die Dicke d des Materials.

In Figur 3 ist eine weitere Ausführungsform einer Backunterlage 1" gezeigt, die statt Rippen 2 bzw. 5 und 6 eine Vielzahl von in regelmäßigen Abständen angeordnete gewölbte Erhebungen, vorzugsweise Halbkugelstrukturen 7 aufweist. Dadurch werden nahezu punktförmige Auflageflächen erzielt, die ein eventuelles Ankleben eines Backgutes erschweren.

Bei den vorgenannten Ausführungsbeispielen ist eine Profilierung vorhanden, die im Vergleich zu einer flachen Backunterlage eine größere verfügbare Oberfläche für das Aufnehmen austretender Flüssigkeit aufweist. Zudem wird erreicht, dass das Backgut durch die Profilierung auch an der Unterseite belüftet werden kann und die Kontaktfläche reduziert wird. Die Backunterlage kann dabei aus einem hitzebeständigem Material, insbesondere Papier, einem Vliesstoff oder einer Metallfolie hergestellt sein.

## Patentansprüche

1. Backunterlage (1 "), mit einem Blatt oder einer Bahn aus hitzebeständigem Material geringer Dicke, wobei das Material eine Profilierung aufweist, die ein vielfaches höher ist als die Dicke des Materials, wobei die Profilierung in regelmäßigen Abständen angeordnete gewälbte Erhebungen umfassen, **dadurch gekennzeichnet, dass** die Profilierungen als gewölbte Erhebungen und Vertiefungen (7) in Form von kalottenförmigen Profilierungen ausgebildet sind, die beidseitig eingeprägt sind.

2. Backunterlage nach Anspruch 1, **dadurch gekennzeichnet, dass** die Höhe der Profilierung mindestens dreißigmal, vorzugsweise mindestens fünfzig- bis hundertmal, so groß ist wie die Dicke des Materials.

3. Backunterlage nach Anspruch 1 oder 2, **dadurch gekennzeichnet, dass** das Material Temperaturen von mindestens 200° ohne Zersetzung oder Schmelzen für mehrere Stunden aushält.

4. Backunterlage nach einem der Ansprüche 1 bis 3, **dadurch gekennzeichnet, dass** das Material verprägt oder verpresst ist.

5. Backunterlage nach einem der Ansprüche 1 bis 4, **dadurch gekennzeichnet, dass** die Materialdicke 10 bis 100 µm beträgt.

6. Backunterlage nach einem der Ansprüche 1 bis 5, **dadurch gekennzeichnet, dass** als Material ein Papier, Kunststoff, Vliesstoff oder eine Metallfolie eingesetzt wird.

## Claims

1. Baking support (1"), with a leaf or a track of heat-resistant material of small thickness, wherein the material has a profiling which is higher by a multiple than the thickness of the material, wherein the profile has arched elevations arranged at regular intervals, **characterised in that** the profilings are formed as arched elevations and depressions (7) in the form of dome-shaped profilings which are stamped in on both sides.

2. Baking support according to claim 1, **characterised in that** the height of the profiling is at least thirty times, preferably at least fifty to a hundred times, as large as the thickness of the material.

3. Baking support according to claim 1 or 2, **characterised in that** the material withstands temperatures of at least 200° for several hours without breaking down or melting.

4. Baking support according to any one of claims 1 to 3, **characterised in that** the material is stamped or pressed.

5. Baking support according to any one of claims 1 to 4, **characterised in that** the material thickness is 10 to 100 microns.

6. Baking support according to any of claims 1 to 5, **characterised in that** a paper, synthetic material, non-woven material or metal foil is used as material.

## Revendications

1. Support de cuisson (1") comportant une feuille ou une bande d'une matière résistant à la chaleur et d'épaisseur réduite,
- la matière ayant un profil avec une hauteur correspondant à un multiple de l'épaisseur de la matière,
- le profil comportant des bossages bombés répartis à des intervalles réguliers,
support **caractérisé en ce que**
le profil est constitué par des bossages bombés et des cavités (7) sous la forme de profils en calotte, imprimés par les deux faces.

2. Support de cuisson selon la revendication 1,
**caractérisé en ce que**
la hauteur du profil est d'au moins trente fois et de préférence cinquante fois à cent fois, l'épaisseur de la matière.

3. Support de cuisson selon la revendication 1 ou 2,
**caractérisé en ce que**
la matière résiste à des températures d'au moins 200°C sans destruction ou sans fusion et cela pendant plusieurs heures.

4. Support de cuisson selon l'une des revendications 1 à 3,
**caractérisé en ce que**
la matière est imprimée ou pressée.

5. Support de cuisson selon l'une des revendications 1 à 4,
**caractérisé en ce que**
la matière a une épaisseur comprise entre 10 et 100 µm.

6. Support de cuisson selon l'une des revendications 1 à 5,
**caractérisé en ce que**
la matière est en papier, matière plastique, non-tissé ou film métallique.
